# EUROPÄISCHE PATENTANMELDUNG

(11) **EP 1 128 650 A2**
(43) Veröffentlichungstag der Anmeldung: **29.08.2001**
(21) Anmeldenummer: 01440044.4
(22) Anmeldetag: 23.02.2001
(51) Int. Cl.: H04M 7/00

(54) **Verfahren und Diensterechner zum Aufbau einer Kommunikationsverbindung über ein IP-Netz**

(30) Priorität: 28.02.2000 DE 10009279
(71) Anmelder: ALCATEL, 75008 Paris (FR)
(72) Erfinder: Weik, Hartmut, 70195 Stuttgart (DE); Krank, Lothar, 71254 Ditzingen (DE); Lautenschlager, Wolfgang, 71287 weissach-Flacht (DE); Stahl, Uwe, 71229 Leonberg (DE)
(74) Vertreter: Dreiss, Fuhlendorf, Steimle & Becker

(57) **Zusammenfassung**

Die Erfindung betrifft ein Verfahren zum Aufbau einer Kommunikationsverbindung über ein Internet-Protocol (IP)-Netz (3) von einem ersten Endgerät (4) eines Telekommunikationsnetzes (2) aus zu einem zweiten Endgerät (6) eines IP-Teilnehmers (5). Um den Aufbau der Kommunikationsverbindung über das IP-Netz (3) auch von herkömmlichen Telefonen (4) aus zu ermöglichen und dadurch eine möglichst weite Verbreitung der IP-Telefonie zu erzielen, wird vorgeschlagen, dass
- der Aufbau der Kommunikationsverbindung von einem Diensterechner (10) koordiniert wird;
- eine Ziel-Adresse des zweiten Endgeräts (6) über das erste Endgerät (4) in einem Sprachformat eingegeben wird;
- die Ziel-Adresse mittels Spracherkennung von dem Sprachformat in ein IP-kompatibles Format umgewandelt wird; und
- von dem Diensterechner (10) der Aufbau der Kommunikationsverbindung von dem ersten Endgerät (4) zu dem zweiten Endgerät (6) unter Zuhilfenahme der Ziel-Adresse in dem IP-kompatiblen Format veranlaßt wird.

## Beschreibung

Die vorliegende Erfindung betrifft ein Verfahren zum Aufbau einer Kommunikationsverbindung über ein Internet-Protocol (IP)-Netz von einem ersten Endgerät eines Telekommunikationsnetzes aus zu einem zweiten Endgerät eines IP-Teilnehmers. Die Erfindung betrifft außerdem einen Diensterechner zum Aufbau einer Kommunikationsverbindung über ein Internet-Protocol (IP)-Netz von einem ersten Endgerät eines Telekommunikationsnetzes aus zu einem zweiten Endgerät eines IP-Teilnehmers. Schließlich betrifft die Erfindung ein Intelligentes Netz mit einem Diensterechner, der Zugriff auf eine Vermittlungsstelle eines untergeordneten Telekommunikationsnetzes hat.

Die vorliegende Erfindung betrifft das Gebiet der Telefonie über Datennetze, insbesondere das Gebiet der Telefonie über Internet-Protocol (IP)-Netze, die sog. Internet-Telefonie.

Aus dem Stand der Technik ist es bekannt, IP-Netze (z. B. Internet oder Intranet) zur Telefonie zu verwenden. Der Internet-Telefonie, die auch als Voice-over-Internet-Protocol (VoIP) bezeichnet wird, wird für die Zukunft eine weite Verbreitung vorausgesagt, da sie gegenüber herkömmlichen Telefonverbindungen über das Telefonnetz, insbesondere bei Ferngesprächen und bei Gesprächen ins Ausland, erhebliche Kosteneinsparungen ermöglicht. Für das VoIP müssen sowohl der Anrufer als auch der Gesprächspartner über Endgeräte mit einem Internet-Zugang verfügen. Um ein Gespräch über ein IP-Netz führen zu können, müssen beiden Endgeräte in Verbindung mit dem Internet stehen. Die Verbindung der Endgeräte zum Internet kann über das Telefonnetz zum Ortstarif hergestellt werden. Die eigentliche große und bei einer herkömmlichen Gesprächsverbindung über das Telefonnetz sehr teure Entfernung zwischen dem Anrufer und dem Gesprächspartner wird über das in der Regel sehr kostengünstige IP-Netz bewältigt.

Es gibt verschiedene Verfahren zur Durchführung von VoIP. Ein wesentlicher Unterschied der Verfahren besteht in der Art der verwendeten Endgeräte. Häufig werden hier multimediafähige Personal Computer (PC) eingesetzt, auf denen eine geeignete Software zum Verschicken von Sprachdaten über das IP-Netz installiert ist. Dadurch ist die Telefonie von PC zu PC via IP-Netz möglich.

Bei der Telefonie von PC zu PC ist der Nutzerkreis jedoch stark eingeschränkt, da eine große Zahl potentieller Nutzer der Internet-Telefonie über keinen PC bzw. keinen entsprechend ausgerüsteten PC verfügen. Deshalb werden von einigen Anbietern von Internet-Telefonie Lösungen angeboten, bei denen mit sog. Gateways ein Übergang von dem herkömmlichen Telefonnetz in ein IP-Netz realisiert werden. Dadurch ist VoIP zwischen einem herkömmlichen Telefon (analog oder ISDN) und einem PC oder sogar zwischen zwei Telefonen möglich. Allerdings bedarf es zur Eingabe der Ziel-Adresse eines Teilnehmers, der nur eine IP-Adresse aufweist, eines besonders ausgestatteten Telefons. Das Telefon muss zumindest über eine Eingabemöglichkeit für alphanummerische Zeichen verfügen. Eine solche Eingabemöglichkeit ist bspw. eine entsprechend ausgestaltete Zifferntastatur, bei der über mehrmaliges Betätigen einer Taste verschiedene alphanummerische Zeichen erzeugt werden können, oder eine gesonderte alphanummerische Tastatur. Nach dem Stand der Technik kann somit nicht von herkömmlichen Telefon aus, das lediglich über eine einfache Zifferntastatur oder gar Wählscheibe verfügt, keine Internet-Telefonie betrieben werden.

Es ist die Aufgabe der vorliegenden Erfindung den Aufbau einer Kommunikationsverbindung auch von herkömmlichen Telefonen aus über ein IP-Netz zu einem IP-Teilnehmer zu ermöglichen, um so eine möglichst weite Verbreitung der Internet-Telefonie zu erzielen.

Zur Lösung dieser Aufgabe schlägt die Erfindung ausgehend von dem Verfahren der eingangs genannten Art vor, dass
- von dem ersten Endgerät eine Rufnummer, die die Übergabe des Verbindungsaufbaus auf einen Diensterechner bewirkt, gewählt wird;
- durch den Diensterechner der Aufbau einer Sprachverbindung von dem ersten Endgerät zu einer Spracherkennungseinrichtung veranlaßt wird;
- eine Ziel-Adresse des zweiten Endgeräts über das erste Endgerät in einem Sprachformat eingegeben wird;
- die Ziel-Adresse mittels Spracherkennung von dem Sprachformat in ein IP-kompatibles Format umgewandelt wird; und
- von dem Diensterechner der Aufbau der Kommunikationsverbindung von dem ersten Endgerät zu dem zweiten Endgerät über ein Gateway unter Zuhilfenahme der Ziel-Adresse in dem IP-kompatiblen Format veranlaßt wird.

Das erste Endgerät ist vorzugsweise als ein Telefon ausgebildet. Von dem Telefon wird eine Rufnummer gewählt, die die Übergabe des Verbindungsaufbaus auf einen Diensterechner bewirkt. Anhand der gewählten Rufnummer und anhand anderer Verbindungsparameter (Herkunft des Anrufes, Datum, Uhrzeit, etc.) erkennt der Diensterechner, dass eine Ziel-Adresse eines Internet-Protocol (IP)-Teilnehmers im Sprachformat eingegeben werden soll und veranlaßt den Aufbau einer Sprachverbindung von dem ersten Endgerät zu einer Spracherkennungseinrichtung.

Anschließend wird über das erste Endgerät die Ziel-Adresse des gewünschten Teilnehmers in einem Sprachformat eingegeben und über die Sprachverbindung an die Spracherkennungseinrichtung weitergeleitet. Die Ziel-Adresse ist bspw. eine Electronic-Mail (eMail) -Adresse (z. B. email@teilnehmer.de), eine Internet-Protocol (IP)-Adresse (Adresse eines Servers in dem IP-Netz; z. B. 149.257.629.430) oder die Adresse einer Homepage des Teilnehmers im IP-Netz (Adresse einer Datei auf einem Server in dem IP-Netz; z. B. http://www.teilnehmer.de). Die Spracherkennungseinrichtung ist entweder als eigenständige Einrichtung ausgebildet oder aber in den Diensterechner integriert. Zur Eingabe der Ziel-Adresse wird - wahlweise auf eine Aufforderung der Spracherkennungseinrichtung hin - die Ziel-Adresse des IP-Teilnehmers ganz einfach von dem Anrufer in das Telefon gesprochen.

Die Spracherkennungseinrichtung wandelt dann die Ziel-Adresse von dem Sprachformat in ein IP-kompatibles Format um. Schließlich veranlaßt der Diensterechner unter Zuhilfenahme der Ziel-Adresse in dem IP-kompatiblen Format den Aufbau der Kommunikationsverbindung von dem ersten Endgerät zu dem zweiten Endgerät des IP-Teilnehmers über das Telekommunikationsnetz, das Gateway und das IP-Netz.

Das erfindungsgemäße Verfahren ermöglicht es denjenigen Telefonnutzern, die lediglich über ein herkömmliches Telefon mit Wählscheibe oder einfacher Zifferntastatur verfügen, erstmals ohne Zusatzgeräte eine Ziel-Adresse eines IP-Teilnehmers einzugeben und Voice-over-Internet-Protocol (VoIP)-Gespräche zu führen.

Gemäß einer vorteilhaften Weiterbildung der vorliegenden Erfindung wird vorgeschlagen, dass von einer Vermittlungsstelle, die mit dem Diensterechner in Verbindung steht, die Rufnummer empfangen und zum Verbindungsaufbau an den Diensterechner übergeben wird.

Damit die Wahl einer bestimmten Rufnummer durch das erste Endgerät die Übergabe des Verbindungsaufbaus auf den Diensterechner bewirkt, ist die Rufnummer für die Vermittlungsstelle erkennbar entsprechend gekennzeichnet. Die Verbindung zwischen Vermittlungsstelle und Diensterechner erfolgt paketorientiert, also nicht leitungsorientiert.

Gemäß einer bevorzugten Ausführungsform der vorliegenden Erfindung wird vorgeschlagen, dass die Ziel-Adresse des zweiten Endgeräts von dem ersten Endgerät über die Vermittlungsstelle an die Spracherkennungseinrichtung übermittelt wird. Die Sprachverbindung von dem ersten Endgerät zu der Spracherkennungseinrichtung verläuft also über die Vermittlungsstelle. Nach der Umwandlung der Ziel-Adresse in das IP-kompatible Format wird die Ziel-Adresse über eine paketorientierte Verbindung von der Spracherkennungseinrichtung zu dem Diensterechner übermittelt.

Von dem Diensterechner wird die Ziel-Adresse dann gemäß einer weiteren bevorzugten Ausführungsform der Erfindung in dem IP-kompatiblen Format an das Gateway übermittelt, das über das IP-Netz eine Voice-over-Internet-Protocol (VoIP)-Verbindung zu dem zweiten Endgerät aufbaut. Die Verbindung zwischen Diensterechner und Gateway erfolgt paketorientiert.

Alternativ wird vorgeschlagen, dass die Ziel-Adresse von dem Diensterechner über die Vermittlungsstelle an das Gateway übermittelt wird. Die Verbindung zwischen Diensterechner und Vermittlungsstelle und zwischen Vermittlungsstelle und Gateway erfolgt paketorientiert.

Schließlich wird vorgeschlagen, dass der Diensterechner zum Aufbau der Kommunikationsverbindung die Vermittlungsstelle veranlaßt, die Sprachverbindung von dem ersten Endgerät zu der Spracherkennungseinrichtung zu trennen und über eine weitere Sprachverbindung an das Gateway zu vermitteln, wo sie mit der VoIP-Verbindung verbunden wird. Die weitere Sprachverbindung erstreckt sich von der Vermittlungsstelle zu dem Gateway.

Als weitere Lösung der Aufgabe der vorliegenden Erfindung wird ausgehend von dem Diensterechner der eingangs genannten Art vorgeschlagen, dass
- der Diensterechner auf eine Spracherkennungseinrichtung Zugriff hat;
- die Spracherkennungseinrichtung eine über das erste Endgerät eingegebene Ziel-Adresse des zweiten Endgeräts von einem Sprachformat in ein IP-kompatibles Format mittels Spracherkennung umwandelt; und
- der Diensterechner den Aufbau der Kommunikationsverbindung von dem ersten Endgerät zu dem zweiten Endgerät über ein Gateway unter Zuhilfenahme der Ziel-Adresse in dem IP-kompatiblen Format veranlaßt.

Gemäß einer vorteilhaften Weiterbildung der Erfindung wird vorgeschlagen, dass der Diensterechner mit einer Vermittlungsstelle des Telekommunikationsnetzes in Verbindung steht, die die Kommunikationsverbindung auf Veranlassung des Diensterechners aufbaut.

Die Spracherkennungseinrichtung kann als gesonderte Einheit ausgebildet sein. Gemäß einer bevorzugten Ausführungsform der Erfindung wird jedoch vorgeschlagen, dass die Spracherkennungseinrichtung integraler Bestandteil des Diensterechners ist. Alternativ wird vorgeschlagen, dass die Spracherkennungseinrichtung integraler Bestandteil der Vermittlungsstelle ist.

Gemäß einer anderen vorteilhaften Weiterbildung der vorliegenden Erfindung wird vorgeschlagen, dass der Diensterechner und die Spracherkennungseinrichtung Teil eines Intelligenten Netzes sind. Dazu ist der Diensterechner als ein sog. Service Control Point (SCP) ausgebildet. Die Vermittlungsstelle des Telekommunikationsnetzes ist als ein sog. Service Switching Point (SSP) ausgebildet. Die Spracherkennungseinrichtung ist bspw. auf einem sog. Specialized Resource Point (SRP) des Intelligenten Netzes realisiert.

Als eine weitere Lösung der Aufgabe der vorliegenden Erfindung wird ausgehend von dem Intelligenten Netz der eingangs genannten Art vorgeschlagen, dass der Diensterechner auf eine Spracherkennungseinrichtung Zugriff hat, die eine über das erste Endgerät eingegebene Ziel-Adresse des zweiten Endgeräts von einem Sprachformat in ein IP-kompatibles Format mittels Spracherkennung umwandelt.

Ein bevorzugtes Ausführungsbeispiel der vorliegenden Erfindung wird im Folgenden anhand der Zeichnung näher erläutert. Es zeigt:

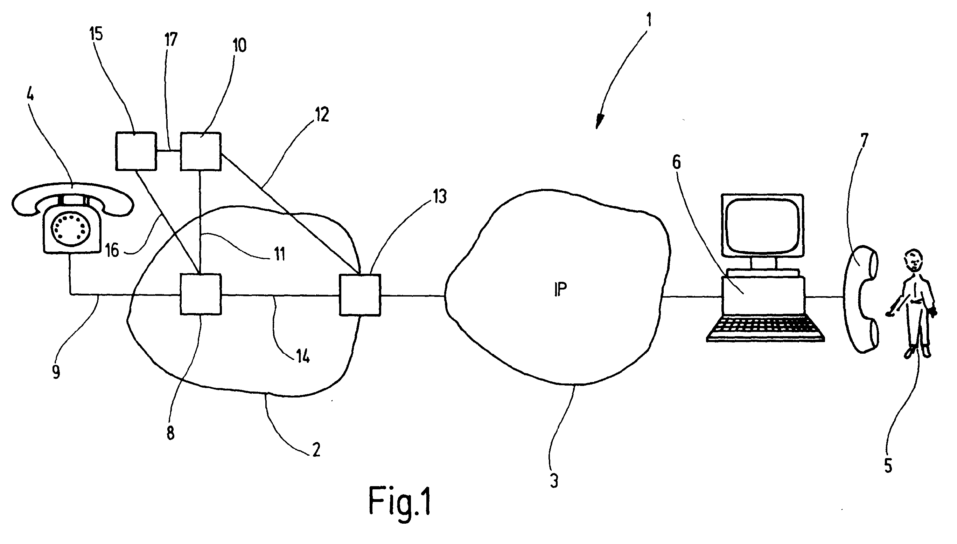

- Figur 1: eine heterogene Netzstruktur, in der das erfindungsgemäße Verfahren realisiert werden kann.

In Figur 1 ist eine heterogene Netzstruktur in ihrer Gesamtheit mit dem Bezugszeichen 1 bezeichnet. Sie umfasst ein als Telefonnetz 2 ausgebildetes Telekommunikationsnetz und ein Internet-Protocol (IP)-Netz 3, das in dem vorliegenden Ausführungsbeispiel als das Internet ausgebildet ist. Das Telefonnetz 2 ist als ein digitales Telefonnetz (z. B. Integrated Services Digital Network, ISDN) oder als ein analoges Telefonnetz (z. B. Public Switched Telephone Network, PSTN) ausgebildet.

Ein als herkömmliches Telefon 4 ausgebildetes erstes Endgerät ist an das Telefonnetz 2 angeschlossen. Ein Übergang von dem herkömmlichen Telefonnetz 2 in das IP-Netz 3 ist mittels eines Gateways 13 realisiert. Ein Internet-Protocol (IP)-Teilnehmer 5 hat über ein als Computer 6 ausgebildetes zweites Endgerät Zugriff auf das IP-Netz 3. Der Computer 6 weist geeignete Mittel 7 zur Ein- und Ausgabe von Sprache auf. Die Mittel 7 sind in Figur 1 nur symbolisch dargestellt. Tatsächlich sind die Mittel 7 bspw. als ein Kopfhörer mit einem daran befestigten Mikrofon ausgebildet, das vor dem Mund des Teilnehmers 5 positioniert ist. Die Mittel 7 sind bspw. an einen Soundkartenausgang (nicht dargestellt) des Computers 6 angeschlossen. Der Computer 6 kann über ein Modem (nicht dargestellt) oder eine ISDN-Karte (nicht dargestellt) über ein Gateway (nicht dargestellt) auf das IP-Netz 3 zugreifen.

Um im Rahmen der IP-Telefonie - dem sog. Voice over Internet Protocol (VoIP) - eine Kommunikationsverbindung von dem Telefon 4 über das IP-Netz 3 zu einem Computer 6 aufbauen zu können, muss zunächst die Ziel-Adresse, unter der der Computer 6 erreichbar ist, von dem Telefon 4 aus eingegeben werden. Die Ziel-Adresse ist bspw. eine Electronic-Mail (eMail)-Adresse (z. B. email@teilnehmer.de), eine Internet-Protocol (IP)-Adresse (Adresse eines Servers in dem IP-Netz; z. B. 149.257.629.430) oder die Adresse einer Homepage des Teilnehmers im IP-Netz 3 (Adresse einer Datei auf einem Server in dem IP-Netz; z. B. http://www.teilnehmer.de).

Zur Eingabe der Ziel-Adresse wird diese in das Telefon 4 gesprochen, durch eine Spracherkennungseinrichtung von dem Sprachformat in ein IP-kompatibles Format umgewandelt und dann die Kommunikationsverbindung über die heterogene Netzstruktur aufgebaut.

Erfindungsgemäß ist zwischen Telefon 4 und dem Gateway 13 zu dem IP-Netz 3 eine Vermittlungsstelle 8 (sog. Service Switching Point, SSP) angeordnet. Die Vermittlungsstelle 8 steht mit einem Diensterechner 10 (sog. Service Control Point, SCP) in Verbindung (Verbindung 11). Die Verbindung 11 ist als eine paketorientierte Verbindung ausgebildet. Der Diensterechner 10 steht mit einem sog. Specialized Resource Point (SRP) 15 in Verbindung (Verbindung 17). Auf dem SRP ist die Spracherkennungseinrichtung 15 ausgebildet. Die Spracherkennungseinrichtung 15 kann als eine gesonderte Einheit oder als eine physikalische Einheit mit dem Diensterechner 10 oder mit der Vermittlungsstelle 8 ausgebildet sein. Die Verbindung 17 ist als eine paketorientierte Verbindung ausgebildet. Die Vermittlungsstelle 8 steht über eine leitungsorientierte Verbindung 16 mit der Spracherkennungseinrichtung 15 in Verbindung. Schließlich steht der Diensterechner 10 über eine paketorientierte Verbindung 12 mit dem Gateway 13 in Verbindung. Der Diensterechner 10 und die Spracherkennungseinrichtung 15 sind Teil eines dem Telefonnetz 2 übergeordneten sog. Intelligenten Netzes.

Zunächst wird von dem Telefon 4 aus eine Rufnummer gewählt, die die Übergabe des Verbindungsaufbaus an einen Diensterechner bewirkt. Die Vermittlungsstelle 8 erkennt die gewählte Rufnummer und übergibt den Verbindungsaufbau an den Diensterechner 10. Anhand der gewählten Rufnummer und anhand weiterer Verbindungsparameter (z. B. Herkunft des Anrufes, Datum, Uhrzeit, etc.) erkennt der Diensterechner 10, dass eine Ziel-Adresse des Computers 6 im Sprachformat eingegeben werden soll und veranlaßt den Aufbau einer Sprachverbindung 9, 16 von dem Telefon 4 zu der Spracherkennungseinrichtung 15.

Anschließend wird über das Telefon 4 die Ziel-Adresse des Computers 6 des gewünschten Teilnehmers 5 in einem Sprachformat eingegeben und über die Sprachverbindung 9, 16 an die Spracherkennungseinrichtung 15 weitergeleitet. Die Spracherkennungseinrichtung 15 wandelt dann die Ziel-Adresse von dem Sprachformat in ein IP-kompatibles Format um. Schließlich veranlaßt der Diensterechner 10 unter Zuhilfenahme der Ziel-Adresse in dem IP-kompatiblen Format den Aufbau der Kommunikationsverbindung von dem Telefon 4 zu dem Computer 6 des IP-Teilnehmers 5 über das Telefonnetz 2, das Gateway 13 und das IP-Netz 3.

Zum Aufbau der Kommunikationsverbindung wird die Ziel-Adresse in dem IP-kompatiblen Format über die Verbindung 12 an das Gateway 13 weitergeleitet, das über das IP-Netz 3 eine VoIP-Verbindung zu dem Computer 6 aufbaut. Danach trennt der Diensterechner 10 die Sprachverbindung 16 von der Spracherkennungseinrichtung 10 und vermittelt die Sprachverbindung 9 über die Sprachverbindung 14 an das Gateway 13, wo sie mit der VoIP-Verbindung verbunden wird. Über die Kommunkationsverbindung kann ein Anrufer von dem Telefon 4 aus mit dem Teilnehmer 5 ein Gespräch führen.

## Patentansprüche

1. Verfahren zum Aufbau einer Kommunikationsverbindung über ein Internet-Protocol (IP)-Netz (3) von einem ersten Endgerät (4) eines Telekommunikationsnetzes (2) aus zu einem zweiten Endgerät (6) eines IP-Teilnehmers (5), **dadurch gekennzeichnet,** dass
- von dem ersten Endgerät (4) eine Rufnummer, die die Übergabe des Verbindungsaufbaus auf einen Diensterechner (10) bewirkt, gewählt wird;
- durch den Diensterechner (10) der Aufbau einer Sprachverbindung (9, 16) von dem ersten Endgerät (4) zu einer Spracherkennungseinrichtung (15) veranlaßt wird;
- eine Ziel-Adresse des zweiten Endgeräts (6) über das erste Endgerät (4) in einem Sprachformat eingegeben wird;
- die Ziel-Adresse mittels Spracherkennung von dem Sprachformat in ein IP-kompatibles Format umgewandelt wird; und
- von dem Diensterechner (10) der Aufbau der Kommunikationsverbindung von dem ersten Endgerät (4) zu dem zweiten Endgerät (6) über ein Gateway (13) unter Zuhilfenahme der Ziel-Adresse in dem IP-kompatiblen Format veranlaßt wird.

2. Verfahren nach Anspruch 1, dadurch gekennzeichnet, dass von einer Vermittlungsstelle (8), die mit dem Diensterechner (10) in Verbindung steht, die Rufnummer empfangen und zum Verbindungsaufbau an den Diensterechner (10) übergeben wird.

3. Verfahren nach Anspruch 2, dadurch gekennzeichnet, dass die Ziel-Adresse des zweiten Endgeräts (6) von dem ersten Endgerät (4) über die Vermittlungsstelle (8) an die Spracherkennungseinrichtung (15) übermittelt wird.

4. Verfahren nach Anspruch 2 oder 3, dadurch gekennzeichnet, dass die Ziel-Adresse in dem IP-kompatiblen Format von dem Diensterechner (10) an das Gateway (13) übermittelt wird, das über das IP-Netz (3) eine Voice-over-Internet-Protocol (VoIP)-Verbindung zu dem zweiten Endgerät (6) aufbaut.

5. Verfahren nach Anspruch 4, dadurch gekennzeichnet, dass die Ziel-Adresse von dem Diensterechner (10) über die Vermittlungsstelle (8) an das Gateway (13) übermittelt wird.

6. Verfahren nach Anspruch 4 oder 5, dadurch gekennzeichnet, dass der Diensterechner (10) die Vermittlungsstelle (8) veranlaßt, die Sprachverbindung (9, 16) von dem ersten Endgerät (4) zu der Spracherkennungseinrichtung (15) zu trennen und über eine weitere Sprachverbindung (14) an das Gateway (13) zu vermitteln, wo sie mit der VoIP-Verbindung verbunden wird.

7. Diensterechner (10) zur Koordinierung des Aufbaus einer Kommunikationsverbindung über ein Internet-Protocol (IP)-Netz (3) von einem ersten Endgerät (4) eines Telekommunikationsnetzes (2) aus zu einem zweiten Endgerät (6) eines IP-Teilnehmers (5), **dadurch gekennzeichnet,** dass
- der Diensterechner (10) auf eine Spracherkennungseinrichtung (15) Zugriff hat;
- die Spracherkennungseinrichtung (15) eine über das erste Endgerät (4) eingegebene Ziel-Adresse des zweiten Endgeräts (6) von einem Sprachformat in ein IP-kompatibles Format mittels Spracherkennung umwandelt; und
- der Diensterechner (10) den Aufbau der Kommunikationsverbindung von dem ersten Endgerät (4) zu dem zweiten Endgerät (6) über ein Gateway (13) unter Zuhilfenahme der Ziel-Adresse in dem IP-kompatiblen Format veranlaßt.

8. Diensterechner (10) nach Anspruch 7, dadurch gekennzeichnet, dass die Spracherkennungseinrichtung (15) integraler Bestandteil des Diensterechners (10) ist.

9. Diensterechner (10) nach Anspruch 7 oder 8, dadurch gekennzeichnet, dass der Diensterechner (10) mit einer Vermittlungsstelle (8) des Telekommunikationsnetzes (2) in Verbindung steht, die die Kommunikationsverbindung auf Veranlassung des Diensterechners (10) aufbaut.

10. Diensterechner (10) nach Anspruch 9, dadurch gekennzeichnet, dass die Spracherkennungseinrichtung (15) integraler Bestandteil der Vermittlungsstelle (8) ist.

11. Diensterechner (10) nach einem der Ansprüche 7 bis 10, dadurch gekennzeichnet, dass der Diensterechner (10) und die Spracherkennungseinrichtung (15) Teil eines Intelligenten Netzes sind.

12. Intelligentes Netz mit einem Diensterechner (10), der Zugriff auf eine Vermittlungsstelle (8) eines untergeordneten Telekommunikationsnetzes (2) hat, insbesondere zur Durchführung des Verfahren nach einem der vorangehenden Ansprüche, **dadurch gekennzeichnet,** dass der Diensterechner (10) auf eine Spracherkennungseinrichtung (15) Zugriff hat, die eine über das erste Endgerät (4) eingegebene Ziel-Adresse des zweiten Endgeräts (6) von einem Sprachformat in ein IP-kompatibles Format mittels Spracherkennung umwandelt.
